# EUROPÄISCHE PATENTSCHRIFT

(11) **EP 3 979 781 B1**
(45) Veröffentlichungstag und Bekanntmachung des Hinweises auf die Patenterteilung: **12.04.2023**
(21) Anmeldenummer: 20727241.0
(22) Anmeldetag: 19.05.2020
(51) Int. Cl.: A01C 15/00, A01C 7/08

(54) **PNEUMATISCHE SAATGUT- UND/ODER DUENGERVERTEILMASCHINE**
PNEUMATIC SEED OR FERTILISER DISTRIBUTION MACHINE
MACHINE DE DISTRIBUTION PNEUMATIQUE DE SEMENCE OU ENGRAIS

(30) Priorität: 06.06.2019 DE 102019115274
(43) Veröffentlichungstag der Anmeldung: 13.04.2022
(73) Patentinhaber: Amazonen-Werke H. Dreyer SE & Co. KG, 49205 Hasbergen (DE)
(72) Erfinder: LUEBBEN, Jan-Eike, 26188 Edewecht (DE)
(86) Internationale Anmeldenummer: PCT/EP2020/063896
(87) Internationale Veröffentlichungsnummer: WO 2020/244919

(56) Entgegenhaltungen:
- EP-A1- 1 759 568
- DE-A1- 19 714 935

## Beschreibung

Die Erfindung betrifft eine pneumatische Saatgut- und/oder Düngerverteilmaschine gemäß dem Oberbegriff des Patentanspruches 1.

Eine derartige pneumatische Saatgut- und/oder Düngerverteilmaschine ist in der EP 1 759 568 A1 beschrieben. Diese pneumatische Saatgut- und/oder Düngerverteilmaschine weist einen Rahmen, einen an dem Rahmen angeordneten und zumindest in seinem unteren Bereich mittels schräg zueinander verlaufender Vorratsbehälterwände trichterförmig ausgestalteten Vorratsbehälter zur Aufnahme von Saatgut und/oder Dünger auf. In dem untersten Bereich des trichterförmigen Vorratsbehälters ist zumindest in einer der Vorratsbehälterwände eine Auslassöffnung angeordnet. An der Auslassöffnung schließt sich über eine Flanschverbindung ein schräg nach unten von der Auslassöffnung verlaufender Auslaufschacht mit einer an dem unteren Ende des Auslaufschachtes angeordneten Dosiereinrichtung an. Unterhalb der Dosiereinrichtung ist zumindest eine zumindest annähernd in Fahrtrichtung ausgerichtete pneumatisch beaufschlagte Förderleitung angeordnet ist.

Bei dieser bekannten Ausgestaltung ist jeweils entsprechend der gewünschten außermittigen Anordnung der Dosiereinrichtung entweder seitlich, vorne oder nach hinten, wobei der Abstand zwischen der Dosiereinrichtung und der entsprechenden Auslauföffnung in dem untersten Bereich der Vorratsbehälterwand des trichterförmigen Vorratsbehälters durch einen dazwischen angeordneten Auslaufschacht überbrückt wird, in der jeweiligen seitlichen, vorderen oder hinteren Vorratsbehälterwand die entsprechende Auslassöffnung angeordnet.

Häufig ist es jedoch erforderlich, dass auf zwei gegenüberliegenden Bereichen des Vorratsbehälters jeweils außermittig eine Dosiereinrichtung angeordnet werden muss, wobei jeweils der Abstand zwischen der außermittig angeordneten Dosiereinrichtung durch einen zwischen dem Vorratsbehälter und der Dosiereinrichtung angeordneten Auslaufschacht überbrückt wird. Eine derartige Ausgestaltung ist bei der bekannten Maschine nicht möglich. Außerdem beanspruchte der Auslaufschacht hier einen großen Raum zu seiner Anordnung zwischen dem Vorratsbehälter und der Dosiereinrichtung.

Der Erfindung liegt die Aufgabe zu Grunde, eine kompakte bauende Maschine mit mehreren einem Vorratsbehälter zugeordneten Dosierorganen und gleichzeitig gute Zugänglich- und Montierbarkeit der Dosiereinrichtung an dem Vorratsbehälter zu schaffen.

Diese Aufgabe wird erfindungsgemäß dadurch gelöst, dass in der vorderen und hinteren Vorratsbehälterwand jeweils eine Auslassöffnung angeordnet ist, dass an beiden Auslassöffnungen jeweils ein von der Auslassöffnung schräg nach unten verlaufender Auslaufschacht über jeweils eine Flanschverbindung angeordnet ist, dass der an der vorderen Auslassöffnung angeordnete Auslaufschacht sich in Fahrtrichtung gesehen nach vorn erstreckt, dass der an der hinteren Auslassöffnung angeordnete Auslaufschacht sich in Fahrtrichtung gesehen nach hinten erstreckt, dass in Draufsicht gesehen die Auslaufschächte mit an ihren unteren Enden angeordneten Dosierorganen seitlich versetzt zueinander und die zugeordneten pneumatisch beaufschlagten Förderleitungen in Draufsicht gesehen ebenfalls seitlich versetzt zueinander angeordnet sind.

Infolge dieser Maßnahmen wird vorgeschlagen, in der vorderen und hinteren Vorratsbehälterwand jeweils eine Auslassöffnung anzuordnen, an welche über eine dann auch jeweils ein Auslaufschacht mit einer in Entfernung zum Vorratsbehälter angeordneten Dosiereinrichtung anzuordnen ist. Somit können also in kompakter Bauweise gleichzeitig jeweils an der vorderen und hinteren Auslauföffnung des Vorratsbehälters jeweils ein Auslaufschacht mit Dosiereinrichtung angeordnet werden. Alternativ kann in die eine Auslauföffnung im untersten Bereich des Vorratsbehälters mit eine Abdeckplatte verschlossen werden, so dass nur auf der vorderen oder hinteren Seite des Vorratsbehälters ein Auslaufschacht mit Dosiereinrichtung angeordnet ist.

Die erfindungsgemäße Ausgestaltung des Vorratsbehälters in seinem unteren Bereich in der vorderen und hinteren Vorratsbehälterwand jeweils eine Auslauföffnung anzuordnen, schafft eine große freie Anordnung sowohl der Dosiereinrichtung auf der vorderen oder hinteren Seite des Vorratsbehälters, so dass die Dosiereinrichtung an der bestmöglichen Position der Maschine bei kompakter Ausgestaltung platziert und angeordnet werden kann. Auch wird der große Vorteil erreicht, dass die aktivierte Anzahl der Ausläufe und der daran angeordneten Auslaufschächte mit Dosiereinrichtungen eine vollkommene Restentleerung des Vorratsbehälters auch bei unterschiedlicher Anordnung der Auslauftrichter an dem Vorratsbehälter sicherstellt.

Somit ist es möglich, den Saatgutbehälters wahlweise mit einer, zwei oder mehr aktivierten Auslauföffnungen sowie mit entsprechender Anzahl von aktiv angeordneten Auslaufschächten mit Dosiereinrichtungen am Vorratsbehälter vorzusehen. Da jeweils die Auslassöffnungen gegenüberliegend und in den Vorratsbehälterwänden in deren untersten Bereich des trichterförmigen Vorratsbehälters angeordnet sind, wird eine Entleerung des Vorratsbehälters auch bei unterschiedlicher Anzahl aktivierter Auslauföffnungen quasi ohne Restmengen ermöglicht.

Auch wird ein großer Abstand der Flanschstellen zueinander, wenn zwei oder mehr Auslaufschächte gegenüberliegend an dem Vorratsbehälter, zu montieren sind, eingehalten, damit diese möglichst ungehindert und bequem montiert werden können.

Somit erlaubt diese Ausgestaltung und Anordnung der Auslaufschächte in gegenüberliegender Weise an einem Vorratsbehälter wahlweise mit einem oder mehreren Ausläufern und entsprechender Anzahl von Dosiereinrichtungen vorzusehen, so dass ein modularer Aufbau der Maschine geschaffen wird.

Einer der wesentlichen Grundgedanken der erfindungsgemäßen Lösung ist es, die Auslauföffnungen in den mit einem ausreichend großen Schüttwinkel schräg verlaufenden Vorratsbehälterwänden anzuordnen. Vor diesen Auslassöffnungen werden dann die erfindungsgemäß angeordneten Auslaufschächte mit den daran angeordneten Dosiereinrichtungen angeordnet. Diese Auslaufschächte sind vorzugsweise trichterartig ausgebildet. Diese Trichterstücke sind für die vordere und hintere Seite in bevorzugter Weise als gleichteilig ausgestaltet. Durch die Länge des jeweiligen Trichterstückes kann der Abstand der beiden Dosiereinrichtungen zueinander festgelegt werden, damit die Montierbarkeit der Dosiereinheiten nicht eingeschränkt wird.

An dieser Stelle sei noch erwähnt, dass unter einer vorderen und hinteren Vorratsbehälterwand alles verstanden wird, wenn die vordere oder hintere Vorratsbehälterwand einen Winkel von 45° bis 90° zu einer in Fahrtrichtung verlaufenden Geraden aufweist. Bevorzugt hierbei ist ein Winkel von zumindest etwa 90° zur Fahrtrichtung, dies vor allem wenn auf der Vorderseite des jeweiligen Vorratsbehälters nur ein Auslaufschacht mit einer Dosiereinrichtung und/oder auf der Rückseite nur ein Auslaufschacht mit einer Dosiereinrichtung platziert werden muss.

Um in besonders einfacher Weise, wenn sowohl auf der Vorder- wie auch auf der Rückseite jeweils ein Auslaufschacht mit daran angeordneten Dosiereinrichtung, denen jeweils eine eigene Förderleitung zugeordnet sind, die Förderleitungen beabstandet und parallel zueinander in Fahrtrichtung verlaufend anordnen zu können, ist vorgesehen, dass die vordere Auslassöffnung in der vorderen Vorratsbehälterwand seitlich versetzt zu der hinteren Auslassöffnung in der hinteren Vorratsbehälterwand angeordnet ist.

Um einen ausreichend großen Abstand der in Fahrtrichtung verlaufend angeordneten Förderleitungen, denen die Dosiereinrichtung das dosierte Material befördern, in einfacher Weise erreichen zu können, ist vorgesehen, dass der untere Auslaufbereich des vorderen Auslaufschachtes mit der daran angeordneten Dosiereinrichtung entgegengesetzt versetzt zur in Fahrtrichtung verlaufenden aufrechten Mittelebene der Maschine zu dem unteren Auslaufbereich des hinteren Auslaufschächte mit der daran angeordneten Dosiereinrichtung angeordnet ist.

Eine vorteilhafte Ausgestaltung der Maschine ergibt sich dadurch, dass in Draufsicht gesehen die Anordnung der Dosiereinrichtung zur in Fahrtrichtung verlaufenden aufrechten Mittelebene der Maschine spiegelsymmetrisch ist.

Um in einfacher Weise an einem Vorratsbehälter auf der Vorder- und Rückseite der Vorratsbehälterwände jeweils zwei Auslaufschächte mit Dosiereinrichtung anordnen zu können, ist vorgesehen, dass die Trichterspitze des Vorratsbehälters als auf dem Kopf stehende Pyramide ausgebildet ist und eine Diagonale der Trichterspitze in Fahrtrichtung verläuft und in die andere Diagonale der Trichterspitze einen Winkel von 90° zur Fahrtrichtung einschließt.

Weitere Einzelheiten der Erfindung sind der Beispielsbeschreibung und den Zeichnungen zu entnehmen. Die Zeichnungen zeigen
- Fig.1: eine erfindungsgemäße pneumatische Saatgut- und/oder Düngerverteilmaschine mit Vorratsbehältern und daran angeordneten Auslaufschächten mit zugeordneten Dosierorganen in Seitenansicht und in vereinfachter Darstellung,
- Fig.2: die erfindungsgemäße pneumatische Saatgut- und/oder Düngerverteilmaschine nach Fig. 2 in Draufsicht und in vereinfachter Darstellung,
- Fig.3: die erfindungsgemäße pneumatische Saatgut- und/oder Düngerverteilmaschine nach den Fig. 2 und 3 in perspektivischer Ansicht und in vereinfachter Darstellung,
- Fig.4: den untersten Bereich eines Vorratsbehälters der Verteilmaschine nach den Fig. 1 bis 3 mit daran angeordneten Auslaufschächten und zugeordneten Dosiereinrichtungen in Teilansicht, in seitlicher perspektivischer Ansicht und in vereinfachter Darstellung, in vergrößertem Maßstab,
- Fig.5: den untersten Bereich eines Vorratsbehälters der Verteilmaschine nach den Fig. 1 bis 3 mit daran angeordneten Auslaufschächten und zugeordneten Dosiereinrichtungen in Teilansicht, in perspektivischer Ansicht V - V von oben und in vereinfachter Darstellung, in vergrößertem Maßstab,
- Fig.6: den untersten Bereich eines Vorratsbehälters der Verteilmaschine nach den Fig. 1 bis 3 mit daran angeordneten Auslaufschächten und zugeordneten Dosiereinrichtungen in Teilansicht, in der Darstellungsweise entsprechend Fig. 5, jedoch mit nur einem Auslaufschacht und einem Dosierorgan und einer Abdeckplatte für eine Auslassöffnung,
- Fig.7: die Anordnung gemäß Fig.6 in anderer perspektivischer Ansicht,
- Fig.8: die Anordnung gemäß Fig.6 und 7 im Teilschnitt VIII - VIII,
- Fig.9: eine weitere erfindungsgemäße pneumatische Saatgut- und/oder Düngerverteilmaschine mit Vorratsbehältern und daran angeordneten Auslaufschächten mit zugeordneten Dosierorganen in Seitenansicht und in vereinfachter Darstellung,
- Fig. 10: die erfindungsgemäße pneumatische Saatgut- und/oder Düngerverteilmaschine nach Fig. 9 in Draufsicht und in vereinfachter Darstellung,
- Fig.11: die erfindungsgemäße pneumatische Saatgut- und/oder Düngerverteilmaschine nach den Fig. 9 und 10 in perspektivischer Ansicht und in vereinfachter Darstellung,
- Fig.12: die Vorratsbehälter der erfindungsgemäßen pneumatische Saatgut- und/oder Düngerverteilmaschine (in Teilansicht) nach Fig. 9 in Draufsicht gemäß der Ansicht XII - XII, in vereinfachter Darstellung und vergrößertem Maßstab,
- Fig.13: die Vorratsbehälter der erfindungsgemäßen pneumatische Saatgut- und/oder Düngerverteilmaschine (in Teilansicht) nach Fig. 9 in Draufsicht gemäß der Ansicht XIII - XIII, in vereinfachter Darstellung und vergrößertem Maßstab.

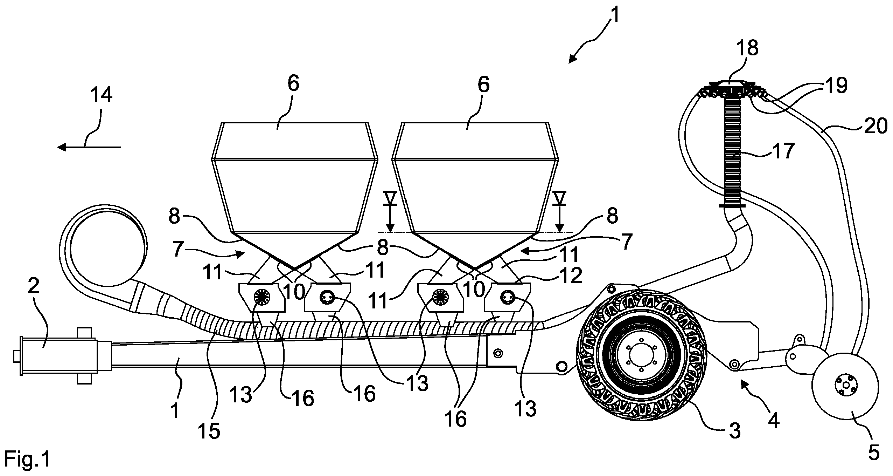

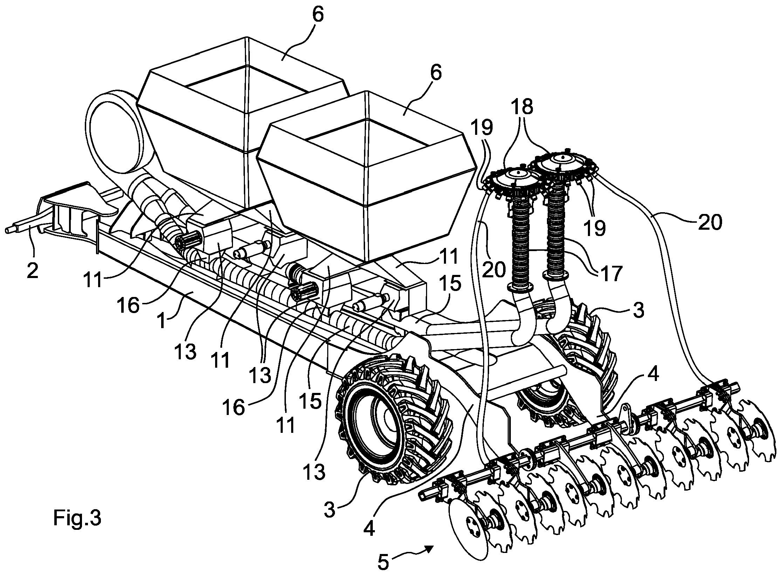

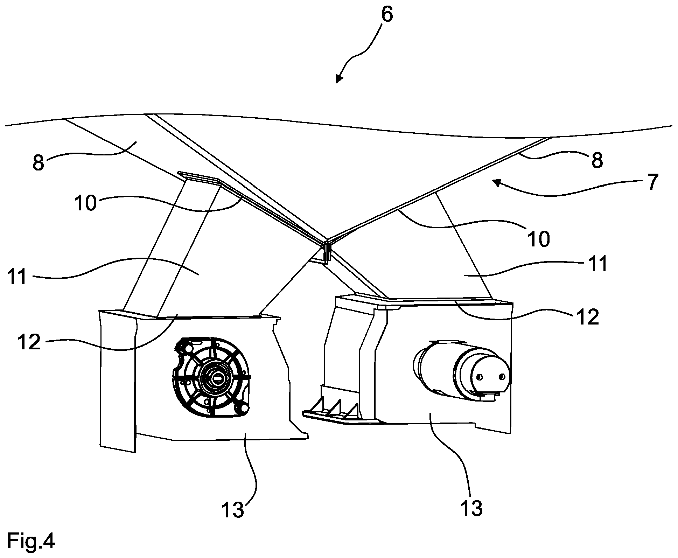

Die pneumatische Saatgut- und/oder Düngerverteilmaschine gemäß den Fig.1 bis 5 weist einen Rahmen 1 auf. Auf der Vorderseite weist der Rahmen 1 eine Zugvorrichtung 2 auf, mittels welcher er an ein nicht dargestelltes Zugfahrzeug anzukuppeln ist. An der Rückseite des Rahmens 1 befindet sich dass die Laufräder 3 aufweisende Fahrwerk sowie die über eine Kuppelvorrichtung 4 angeordnete Sävorrichtung mit den Säscharen 5. Auf dem Rahmen 1 sind im Ausführungsbeispiel zwei trichterförmige Vorratsbehälter 6 zur Aufnahme des zu verteilenden Materiales, wie Saatgut oder Dünger angeordnet. Die beiden Vorratsbehälter 6 sind gleich ausgebildet, so dass im Folgenden nur einer der beiden Vorratsbehälter 6 näher beschrieben wird.

Der Vorratsbehälter 6 ist in seinem unteren Bereich 7 mittels schräg zueinander verlaufender Vorratsbehälterwände 8 trichterförmig ausgestaltet. Der Vorratsbehälter 6 ist zur Aufnahme von Saatgut und/oder Dünger vorgesehen. In dem untersten Bereich 7 des trichterförmigen Vorratsbehälters 6 ist in der vorderen und hinteren Vorratsbehälterwand 8 jeweils eine Auslassöffnung 9 angeordnet. An der jeweiligen Vorratsbehälterwand 8 ist vor der jeweiligen Auslassöffnung 9 über eine Flanschverbindung 10 ein von der Auslassöffnung 9 schräg nach unten verlaufender Auslaufschacht 11 mit einer an dem unteren Ende 12 des Auslaufschachtes 11 angeordneten Dosiereinrichtung 13 mittels einer Flanschverbindung 10 anschließend angeordnet. Unterhalb jeder der Dosiereinrichtungen 13 ist eine zumindest annähernd in Fahrtrichtung 14 ausgerichtete pneumatisch beaufschlagte Förderleitung 15 angeordnet. In der Förderleitung 15 ist im Bereich der oberhalb angeordneten Dosiereinrichtung 13 eine Einschleuseinrichtung 16 angeordnet, über welche das von der Dosiereinrichtung 13 aus dem Vorratsbehälter 6 dosierte Material in dosierter Weise in die jeweilige Förderleitung 15 einzuspeisen ist. An dem jeweiligen Ende der Förderleitung 15 ist ein aufrecht stehendes Steigrohr 16 angeordnet. An dem oberen Ende des Steigrohres 16 ist ein Verteilerkopf 18 angeordnet. Von dem Verteilerkopf 18 zweigen eine Vielzahl von Ausgangsleitungen 19 ab. An diesen Ausgangsleitungen 19 sind jeweils zu Säscharen 5 führende Saatleitungen 20 angeschlossen. Über diese Saatleitungen 20 wird den Säscharen 5 das im Boden abzulegende Material zugeführt.

Der an der vorderen Auslassöffnung 9 des jeweiligen Vorratsbehälters 6 angeordnete Auslaufschacht 11 erstreckt sich in Fahrtrichtung 14 gesehen nach vorn, während der an der hinteren Auslassöffnung 8 des jeweiligen Vorratsbehälters 6 angeordnete Auslaufschacht 11 sich in Fahrtrichtung 14 gesehen nach hinten erstreckt. In Draufsicht gesehen sind die Auslaufschächte 11 mit an ihren unteren Enden angeordneten Dosierorganen 13 seitlich versetzt zueinander angeordnet. Die zugeordneten pneumatisch beaufschlagten Förderleitungen 15 sind in Draufsicht gesehen ebenfalls seitlich versetzt und beabstandet zueinander angeordnet.

Der untere Auslaufbereich des vorderen Auslaufschachtes 11 mit der daran angeordneten Dosiereinrichtung 13 ist entgegengesetzt versetzt zur in Fahrtrichtung 14 verlaufenden aufrechten Mittelebene der Maschine zu dem unteren Auslaufbereich des hinteren Auslaufschachtes 11 mit der daran angeordneten Dosiereinrichtung 13 angeordnet.

In Draufsicht gesehen ist die Anordnung der Dosiereinrichtung 13 zur in Fahrtrichtung 14 verlaufenden aufrechten Mittelebene der Maschine spiegelsymmetrisch.

Wie aus den Zeichnungen ersichtlich, baut die Verteilmaschine aufgrund der sich an den vorderen und hinteren Vorratsbehälterwänden anschließenden Auslaufschächte 11 mit den daran angeordneten Dosiereinrichtung 13 relativ kompakt. Durch die vorbeschriebene Anordnung der Auslauföffnungen 9, Auslaufschächte 11 und den daran angeordneten Dosiereinrichtungen 13, sind die Dosiereinrichtungen 13 ausreichend weit voneinander entfernt, so dass ein ausreichend großer Abstand zueinander vorhanden ist damit eine bequeme Montage jeder Dosiereinrichtung 13 möglich ist.

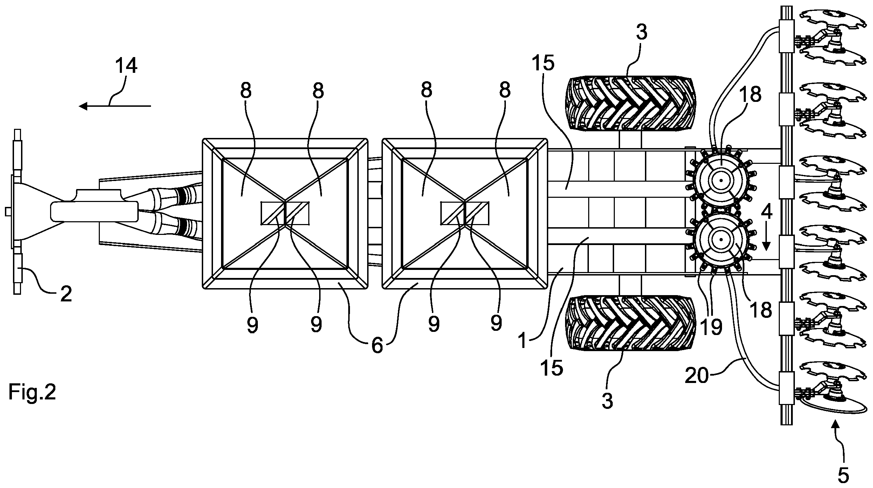

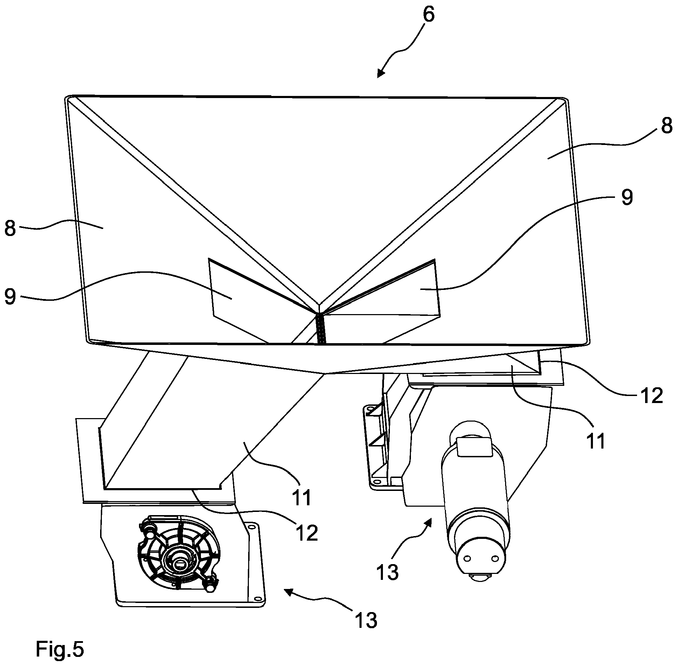

Wie insbesondere aus den Fig. 2 und 5 zu ersehen ist, wird durch die entsprechende Anordnung der Auslauföffnungen 9 in dem untersten Bereich der trichterförmigen Wände 8 eine vollständige Restentleerung erreicht.

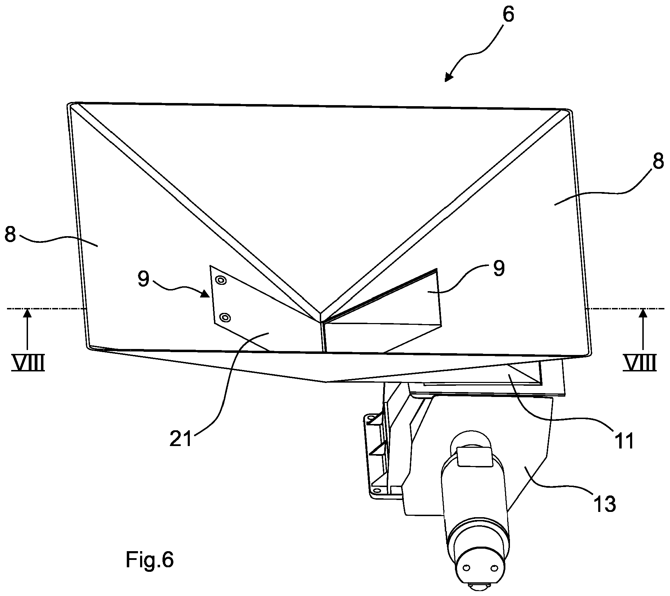

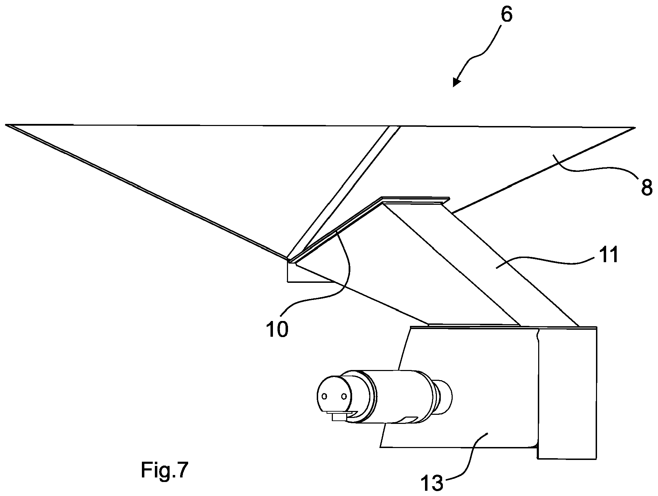

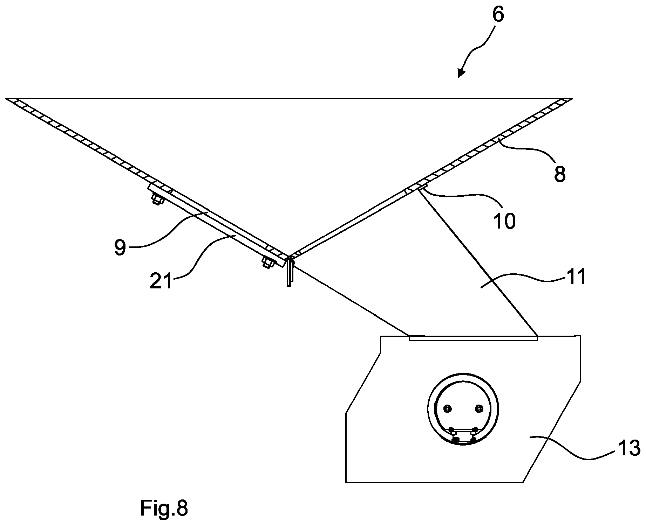

Die Ausgestaltung des Vorratsbehälters 6 gemäß den Fig.6 bis 8 und Anordnung der zugeordneten Dosiereinrichtung 13 unterscheidet sich von den Ausführung gemäß den Fig.1 bis 5 dadurch, dass die Auslauföffnung 9 in der vorderen schrägen Wand 8 des Vorratsbehälters 6 durch eine davor mittels Befestigungselemente befestigte Abdeckplatte 9 verschlossen ist, und nur vor der Auslauföffnung in der hinteren schrägen Wand 8 des Vorratsbehälters 6 der Auslaufschacht 11 mit der daran angeordneten Dosiereinrichtung 13 angeordnet ist. Durch dieses Ausführungsbeispiel soll gezeigt werden, dass je nach Erfordernis der Einsatzverhältnisse die Maschine in modularer Weise an die jeweiligen Anforderungen einfach durch die entsprechende Anzahl von Auslaufschächten 11 mit daran angeordneter Dosiereinrichtung 13 und Förderleitungen 15 angepasst werden kann.

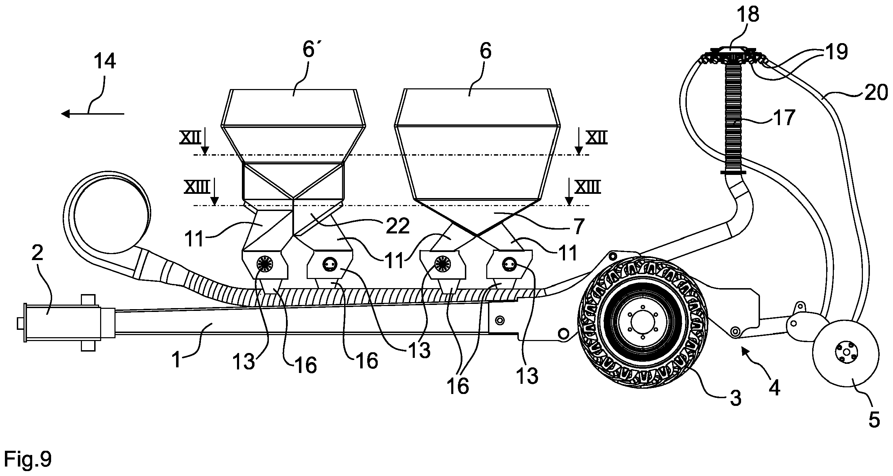

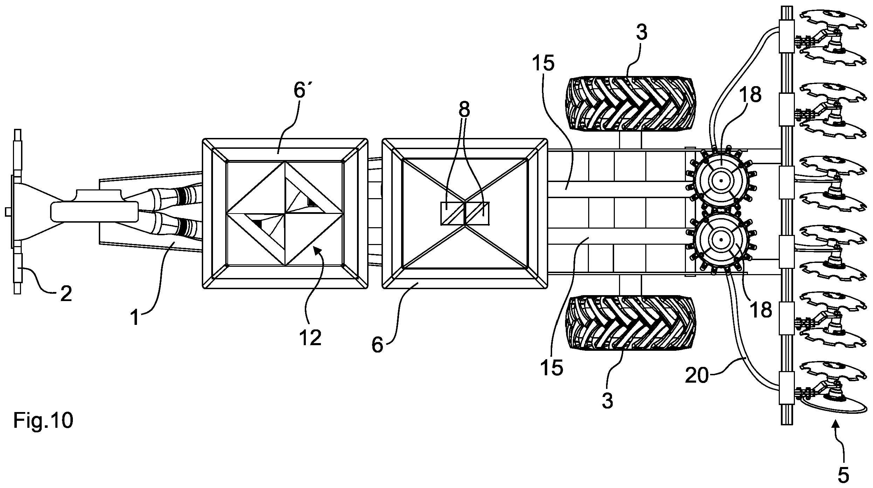

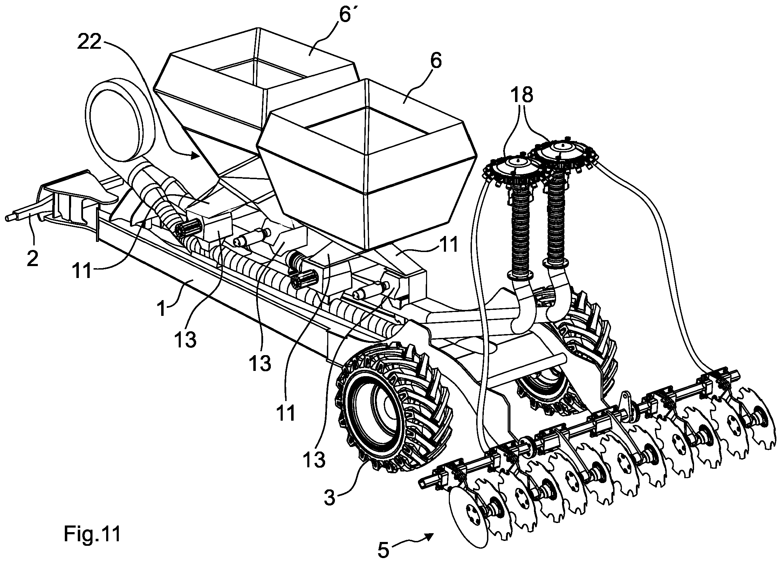

Die pneumatische Saatgut- und/oder Düngerverteilmaschine gemäß den Fig.9 bis 13 unterscheidet sich von der Verteilmaschine gemäß den Fig.1 bis 5 durch eine andere Ausgestaltung des unteren Bereiches des vorderen Vorratsbehälters 6`. Bei der pneumatischen Saatgut- und/oder Düngerverteilmaschine gemäß den Fig.9 bis 13 ist die Trichterspitze 22 des vorderen Vorratsbehälters 6' als auf dem Kopf stehenden Pyramide ausgebildet und eine Diagonale der Trichterspitze 22 in Fahrtrichtung 14 verläuft und in die andere Diagonale der Trichterspitze 22 schließt einen Winkel von 90° zur Fahrtrichtung 14 ein.

Hierbei ist jede trichterförmige Vorratsbehälterwand 8 nach vorne oder hinten ausgerichtet. Unter einer vorderen und hinteren Vorratsbehälterwand 8 wird nach dieser Erfindung alles verstanden, wenn die vordere oder hintere Vorratsbehälterwand einen Winkel von 45° bis 90° zu einer in Fahrtrichtung 14 verlaufenden Geraden aufweist. Somit fällt auch eine trichterförmige Vorratsbehälterwand 8 unter diese Definition, wenn, wie bei diesen Ausführungsbeispielen gemäß den Figuren 9 bis 13, diese einen Winkel von 45° zur Fahrtrichtung 14 einschließen, dies vor allem wenn auf der Vorderseite und der Rückseite des Vorratsbehälters 6' jeweils zwei Auslaufschächte 11 mit daran angeordneter Dosiereinrichtung 13 und/oder auf der Rückseite nur eine Dosiereinrichtung 13 platziert werden müssen.

In jeder schräg nach unten verlaufenden Vorratsbehälterwand 8 ist in dem unteren Bereich der pyramidenartig ausgebildeten Trichterspitze 22 jeweils eine Auslassöffnung 9 angeordnet.

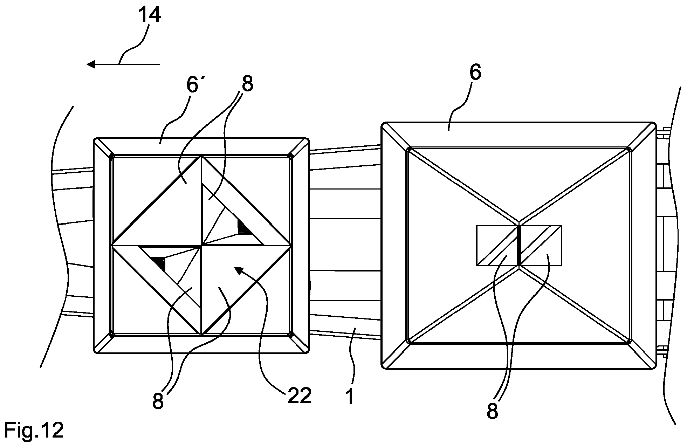

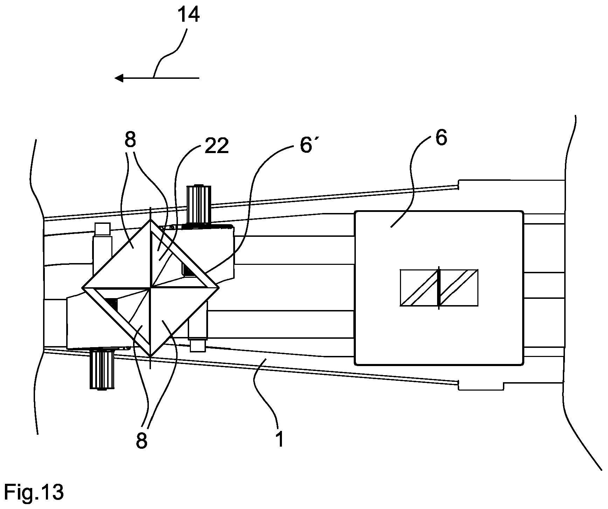

Hierbei sind die die vorderen Auslassöffnungen in der vorderen Vorratsbehälterwand 8 entsprechend seitlich versetzt zu den hinteren Auslassöffnungen 9 in der hinteren Vorratsbehälterwand 8 angeordnet, wie insbesondere die Fig.12 und 13 bei dem vorderen Vorratsbehälter 6' zeigen. Der hintere Vorratsbehälter 6 entspricht den Vorratsbehältern der Fig. 1 bis 5.

## Patentansprüche

1. Pneumatische Saatgut- und/oder Düngerverteilmaschine mit einem Rahmen (1), einem an dem Rahmen (1) angeordneten und zumindest in seinem unteren Bereich (7) mittels schräg zueinander verlaufender Vorratsbehälterwände (8) trichterförmig ausgestalteten Vorratsbehälter (6,6`) zur Aufnahme von Saatgut und/oder Dünger, wobei in dem untersten Bereich (7) des trichterförmigen Vorratsbehälters (6,6`) zumindest in einer der vorderen und hinteren Vorratsbehälterwand (8) eine Auslassöffnung (9) angeordnet ist, wobei sich an der Auslassöffnung (9) über eine Flanschverbindung (10) ein schräg nach unten von der Auslassöffnung (9) verlaufender Auslaufschacht (11) mit einer an dem unteren Ende des Auslaufschachtes (11) angeordneten Dosiereinrichtung (13) (13) anschließt, wobei unterhalb der Dosiereinrichtung (13) zumindest eine zumindest annähernd in Fahrtrichtung (14) ausgerichtete pneumatisch beaufschlagte Förderleitung (15) angeordnet ist, **dadurch gekennzeichnet, dass** in der vorderen und hinteren Vorratsbehälterwand (8) jeweils eine Auslassöffnung (9) angeordnet ist, dass an beiden Auslassöffnungen jeweils ein von der Auslassöffnung (9) schräg nach unten verlaufender Auslaufschacht (11) über jeweils eine Flanschverbindung (10) angeordnet ist, dass der an der vorderen Auslassöffnung (9) angeordnete Auslaufschacht (11) sich in Fahrtrichtung (14) gesehen nach vorn erstreckt, dass der an der hinteren Auslassöffnung (9) angeordnete Auslaufschacht (11) sich in Fahrtrichtung (14) gesehen nach hinten erstreckt, dass in Draufsicht gesehen die Auslaufschächte (11) mit an ihren unteren Enden angeordneten Dosierorganen (13) seitlich versetzt zueinander und die zugeordneten pneumatisch beaufschlagten Förderleitungen (15) in Draufsicht gesehen ebenfalls seitlich versetzt zueinander angeordnet sind.

2. . Pneumatische Saatgut- und/oder Düngerverteilmaschine nach Anspruch 1, **dadurch gekennzeichnet, dass** die vordere Auslassöffnung (9) in der vorderen Vorratsbehälterwand (8) seitlich versetzt zu der hinteren Auslassöffnung (9) in der hinteren Vorratsbehälterwand (8) angeordnet ist.

3. . Pneumatische Saatgut- und/oder Düngerverteilmaschine nach Anspruch 1, **dadurch gekennzeichnet, dass** der untere Auslaufbereich des vorderen Auslaufschachtes (11) mit der daran angeordneten Dosiereinrichtung (13) entgegengesetzt versetzt zur in Fahrtrichtung (14) verlaufenden aufrechten Mittelebene der Maschine zu dem unteren Auslaufbereich des hinteren Auslaufschächte (11) mit der daran angeordneten Dosiereinrichtung (13) angeordnet ist.

4. . Pneumatische Saatgut- und/oder Düngerverteilmaschine nach zumindest einem der vorstehenden Ansprüche, **dadurch gekennzeichnet, dass** in Draufsicht gesehen die Anordnung der Dosiereinrichtung (13) zur in Fahrtrichtung (14) verlaufenden aufrechten Mittelebene der Maschine spiegelsymmetrisch ist.

5. . Pneumatische Saatgut- und/oder Düngerverteilmaschine nach zumindest einem der vorstehenden Ansprüche, **dadurch gekennzeichnet, dass** die Trichterspitze (42) des Vorratsbehälters (6`) als auf dem Kopf stehenden Pyramide ausgebildet ist und eine Diagonale der Trichterspitze (22) in Fahrtrichtung (14) verläuft und in die andere Diagonale der Trichterspitze (22) einen Winkel von 90° zur Fahrtrichtung (14) einschließt.

## Claims

1. Pneumatic seed and/or fertilizer distributing machine comprising a frame (1), a storage container (6,6'), which is arranged on the frame (1) and designed in the shape of a funnel at least in its lower region (7) by means of storage container walls (8) extending obliquely to one another, for receiving seed and/or fertilizer, an outlet opening (9) being arranged in the lowermost region (7) of the funnel-shaped storage container (6.6') at least in one of the front and rear storage container walls (8), a discharge shaft (11) extending obliquely downward from the outlet opening (9) and having a metering device (13) arranged at the lower end of the discharge shaft (11) being connected to the outlet opening (9) by means of a flange connection (10), at least one pneumatically acted-on conveying line (15) being arranged below the metering device (13), at least one pneumatically actuated conveying line (15), which is at least approximately aligned in the direction of travel (14), being arranged below the metering device (13) **characterized in that** an outlet opening (9) is arranged in each case in the front and rear storage container wall (8), **in that** a discharge shaft (11), which extends obliquely downward from the outlet opening (9), is arranged on both outlet openings by means of a flange connection (10) in each case, **in that** the discharge shaft (11) arranged at the front outlet opening (9) extends forward when viewed in the direction of travel (14), **in that** the discharge shaft (11) arranged at the rear outlet opening (9) extends backward when viewed in the direction of travel (14), **in that**, when viewed in plan view, the discharge shafts (11) having metering elements arranged at their lower ends are arranged laterally offset from one another and the associated pneumatically actuated conveying lines (15) are likewise arranged laterally offset from one another when viewed in plan view.

2. Pneumatic seed and/or fertilizer distributing machine according to claim 1, **characterized in that** the front outlet opening (9) is arranged in the front storage container wall (8) laterally offset from the rear outlet opening (9) in the rear storage container wall (8).

3. Pneumatic seed and/or fertilizer distributing machine according to claim 1, **characterized in that** the lower discharge region of the front discharge shaft (11) having the metering device (13) arranged thereon is arranged offset in the opposite direction to the upright central plane of the machine extending in the direction of travel (14) from the lower discharge region of the rear discharge shaft (11) having the metering device (13) arranged thereon.

4. Pneumatic seed and/or fertilizer distributing machine according to at least one of the preceding claims, **characterized in that,** in plan view, the arrangement of the metering device (13) is mirror-symmetrical relative to the upright central plane of the machine extending in the direction of travel (14).

5. Pneumatic seed and/or fertilizer distributing machine according to at least one of the preceding claims, **characterized in that** the funnel tip (42) of the storage container (6') is designed as an upside-down pyramid and a diagonal of the funnel tip (22) extends in the direction of travel (14) and forms an angle of 90° to the direction of travel (14) into the other diagonal of the funnel tip (22).

## Revendications

1. Machine pneumatique de distribution de semence et/ou d'engrais comprenant un cadre (1), un récipient de stockage (6, 6') pour la réception de semence et/ou d'engrais agencé sur le cadre (1) présentant une forme d'entonnoir au moins dans sa zone inférieure (7) au moyen de parois de récipient de stockage (8) s'étendant de manière oblique l'une par rapport à l'autre, dans laquelle, dans la zone la plus en dessous (7) du récipient de stockage (6, 6') en forme d'entonnoir, au moins dans une des parois de récipient de stockage (8) avant et arrière, une ouverture de sortie (9) est agencée, dans laquelle un puits d'évacuation (11) s'étendant de manière oblique vers le bas depuis l'ouverture de sortie (9) se raccorde au niveau de l'ouverture de sortie (9) par le biais d'un raccord à bride (10) à un dispositif de dosage (13) (13) agencé au niveau de l'extrémité inférieure du puits d'évacuation (11), dans laquelle en dessous du dispositif de dosage (13), au moins une conduite de transport (15) sollicitée de manière pneumatique orientée au moins approximativement dans la direction d'avance (14) est agencée, **caractérisée en ce qu'**une ouverture de sortie (9) est respectivement agencée dans les parois de récipient de stockage (8) avant et arrière, qu'un puits d'évacuation (11) s'étendant de manière oblique vers le bas depuis l'ouverture de sortie (9) est respectivement agencé au niveau des deux ouvertures de sortie par le biais d'un raccordement à bride (10) respectif, que le puits d'évacuation (11) agencé au niveau de l'ouverture de sortie (9) avant s'étend vers l'avant vu dans la direction d'avance (14), que le puits d'évacuation (11) agencé au niveau de l'ouverture de sortie (9) arrière s'étend vers l'arrière vu dans la direction d'avance (14), que, vus dans une vue de dessus, les puits d'évacuation (11) avec des organes de dosage (13) agencés au niveau de leurs extrémités inférieures sont agencés décalés latéralement l'un par rapport à l'autre et les conduites de transport sollicitées de manière pneumatique (15) associées, vues dans la vue de dessus, sont également agencées décalées latéralement l'une par rapport à l'autre.

2. . Machine pneumatique de distribution de semence et/ou d'engrais selon la revendication 1, **caractérisée en ce que** l'ouverture de sortie (9) avant dans la paroi de récipient de stockage (8) avant est décalée latéralement par rapport à l'ouverture de sortie (9) arrière dans la paroi de récipient de stockage (8) arrière.

3. . Machine pneumatique de distribution de semence et/ou d'engrais selon la revendication 1, **caractérisée en ce que** la zone d'évacuation inférieure du puits d'évacuation (11) avant avec le dispositif de dosage (13) agencé dessus est agencée décalée dans un sens opposé par rapport au plan médian vertical s'étendant dans la direction d'avance (14) de la machine et à la zone d'évacuation inférieure du puits d'évacuation (11) arrière avec le dispositif de dosage (13) agencé dessus.

4. . Machine pneumatique de distribution de semence et/ou d'engrais selon au moins l'une quelconque des revendications précédentes, **caractérisée en ce que**, vu dans la vue de dessus, l'agencement du dispositif de dosage (13) est symétrique par réflexion au plan médian vertical s'étendant dans la direction d'avance (14) de la machine.

5. . Machine pneumatique de distribution de semence et/ou d'engrais selon au moins l'une quelconque des revendications précédentes, **caractérisée en ce que** la pointe de l'entonnoir (42) du récipient de stockage (6`) est conçue comme une pyramide debout sur sa pointe et une diagonale de la pointe de l'entonnoir (22) s'étend dans la direction d'avance (14) et l'autre diagonale de la pointe de l'entonnoir (22) forme un angle de 90° par rapport à la direction d'avance (14).
